# EUROPÄISCHE PATENTSCHRIFT

(11) **EP 3 137 191 B1**
(45) Veröffentlichungstag und Bekanntmachung des Hinweises auf die Patenterteilung: **13.11.2019**
(21) Anmeldenummer: 15723156.4
(22) Anmeldetag: 29.04.2015
(51) Int. Cl.: B01D 39/16

(54) **FILTERELEMENT UND VERFAHREN ZU DESSEN HERSTELLUNG**
FILTER ELEMENT AND METHOD FOR THE PRODUCTION THEREOF
ÉLÉMENT DE FILTRATION ET PROCÉDÉ DE FABRICATION DE CELUI-CI

(30) Priorität: 30.04.2014 DE 102014208200
(43) Veröffentlichungstag der Anmeldung: 08.03.2017
(73) Patentinhaber: WTA Vogtland GmbH, 08525 Plauen (DE)
(72) Erfinder: VOIGT, Reinhard, 99867 Gotha (DE); ALBRECHT, Volker, 08523 Plauen (DE); MÜLLER, Hardy, 08262 Muldenhammer (DE); BOCK, Kurt, 99084 Erfurt (DE); SEMMLER, Eberhard, 99444 Blankenhain OT Meckfeld (DE)
(74) Vertreter: Liedtke, Markus
(86) Internationale Anmeldenummer: PCT/EP2015/059377
(87) Internationale Veröffentlichungsnummer: WO 2015/165988

(56) Entgegenhaltungen:
- EP-A1- 0 808 648
- DE-A1-102008 019 085
- US-A1- 2003 033 935

## Beschreibung

Die Erfindung betrifft ein Filterelement nach dem Oberbegriff des Anspruchs 1 und ein Verfahren zur Herstellung des Filterelementes.

Aus der DE 10 2008 019 085 A1 ist ein Filterverbundmaterial bekannt, umfassend eine erste und zweite Filtrationsmembran und ein dazwischen angeordnetes Drainagegewebe. Das Drainagegewebe und die Filtrationsmembranen werden mittels Klebenetzen miteinander laminiert. Ein Flachfilterelement wird als Zuschnitt aus dem Filterverbundmaterial gefertigt und hat eine der jeweiligen Anwendung angepasste geometrische Form.

Aus der DE 10 2004 051 671 A1 ist eine Vorrichtung zum Filtern von Stoffen aus Flüssigkeiten bekannt.

Im Stand der Technik wird in bekannten Filterelementen als Drainageelement ein Abstandsgewirke eingesetzt, welches ein in der Fläche sehr stark dehnbares textiles Gebilde ist.

Der Erfindung liegt die Aufgabe zu Grunde, ein verbessertes Filterelement sowie ein verbessertes Verfahren zur Herstellung des Filterelementes anzugeben.

Bezüglich des Filterelementes wird die Aufgabe erfindungsgemäß gelöst durch die Merkmale des Anspruchs 1. Bezüglich des Verfahrens zur Herstellung des Filterelementes wird die Aufgabe erfindungsgemäß gelöst durch ein Verfahren mit den Merkmalen des Anspruchs 13.

Vorteilhafte Ausgestaltungen der Erfindung sind Gegenstand der Unteransprüche.

Das Filterelement umfasst ein zwischen zwei Filtermembranen angeordnetes Drainageelement. Erfindungsgemäß ist das Drainageelement ein Filtervlies, welches zwischen den Filtermembranen jeweils mittels eines Klebevlieses laminiert angeordnet ist.

Insbesondere ist das Filtervlies als ein Vliesstoff ausgebildet, der ein stabiles, verarbeitungsfähiges Gebilde darstellt, das durch Verfestigung eines Vlieses (leicht trennbares Fasergebilde) gebildet wird.

Überraschend ist, dass das erfindungsgemäß verwendete Klebevlies sehr gut am erfindungsgemäßen Drainageelement haftet, obwohl im Stand der Technik verwendetes Abstandsgewirke selbst dann einen schlechten Verbund mit Klebevlies aufweist, wenn große Mengen an Kleber verwendet werden.

Das erfindungsgemäße Filterelement weist eine hohe Stabilität gegenüber Zug- und Druckspannungen parallel zur Flächennormale sowie eine sehr gute Haltbarkeit auf. Zudem weist das Drainageelement einen gegenüber den vorbekannten Erzeugnissen sehr geringen Strömungswiderstand auf. Außerdem ist die Herstellung des erfindungsgemäßen Filterelementes aufgrund der Verwendung von Klebevlies ohne die im Stand der Technik erforderlichen großen Mengen von Klebstoff möglich, wodurch der Strömungswiderstand erfindungsgemäß gering ist. Überraschend ist dabei, dass trotz der gegenüber dem Stand der Technik reduzierten Menge an Kleber eine verbesserte Stabilität und vor allem eine verbesserte Dauerhaftigkeit erzielbar ist.

Das erfindungsgemäße Filterelement ist ein mechanisch stabiles Laminat, welches geringe Längenänderungen durch plastische Verformung unter Dauerlast sowie eine gegenüber dem Stand der Technik sehr geringe Neigung zum Quellen bei Wasserkontakt aufweist.

Das erfindungsgemäße Filterelement ist außerdem gegenüber dem Stand der Technik weniger flexibel. Dadurch wird eine Neigung zum Flattern in der Flüssigkeitsströmung des Crossflow reduziert sowie eine sehr geringe Abstandsänderung zwischen benachbarten Filtermembranen im Filtrationsbetrieb bewirkt. Durch die konstanten Abstände zwischen den erfindungsgemäß angeordneten Filtermembranen wird der Reinigungseffekt erheblich vergrößert. Das erfindungsgemäße Filterelement ist besonders kostengünstig herstellbar, da ein aufwendiges und damit teures Abstandsgewirke, das im Stand der Technik zudem aufwendig stabilisiert werden muss, entbehrlich ist.

Ein besonderer Vorteil ist, dass das erfindungsgemäße Filterelement einen gegenüber dem Stand der Technik geringeren Strömungswiderstand aufweist, da die erfindungsgemäße Klebeverbindung nur sehr geringfügig die frei durchströmbare Fläche reduziert.

Die Bestandteile des erfindungsgemäßen Filterelementes besitzen jeweils in der Ebene ihrer Schicht eine zumindest makroskopisch gleichmäßige und isotrope Materialverteilung und innerhalb jeder Schicht eine solche Materialverteilung in Richtung der Normalen.

Das erfindungsgemäße Filterelement ermöglicht einen sicheren Kantenverschluss, indem korrespondierende Ränder der Filtermembranen auf einfache Weise miteinander verschweißt werden.

Eine Ausgestaltung des erfindungsgemäßen Filterelementes sieht vor, dass das Filtervlies aus ersten Fasern und zweiten Fasern gebildet ist, wobei die ersten Fasern Strukturfasern sind und die zweiten Fasern zumindest einen niedrigschmelzenden Klebermantel aufweisen, das heißt, dass die zweiten Fasern entweder einen niedrigschmelzenden Klebermantel aufweisen oder vollständig niedrigschmelzend sind. Als niedrigschmelzender Klebermantel wird dabei ein Klebermantel angesehen, dessen Schmelztemperatur zwischen 70°C und maximal 140°C beträgt, dem entsprechend bedeutet niedrigschmelzend, dass die Schmelztemperatur zwischen 70°C und maximal 140°C beträgt. Das derartig ausgestaltete Drainageelement besitzt in seiner Fläche einen geringen Strömungswiderstand und ist besonders formstabil gegenüber Zugspannungen in dieser Fläche.

Eine weitere Ausgestaltung des erfindungsgemäßen Filterelementes sieht vor, dass die Strukturfasern aus hochschmelzendem Kunststoff, beispielsweise aus Polyester oder Polypropylen mit einem Schmelzpunkt über 140°C, aus Mineralstoff oder aus Naturfasern bestehen. Derartige Strukturfasern verleihen dem Filterelement eine besonders hohe Festigkeit.

Eine weitere Ausgestaltung des erfindungsgemäßen Filterelementes sieht vor, dass die Strukturfasern zwischen 25 dtex und 100 dtex, besonders bevorzugt 40dtex bis 60dtex, aufweisen. Es hat sich gezeigt, dass dadurch bei geringem Strömungswiderstand eine hohe Festigkeit erreichbar ist.

Eine weitere Ausgestaltung des erfindungsgemäßen Filterelementes sieht vor, dass die zweiten Fasern zwischen 4 dtex und 36 dtex, besonders bevorzugt 15 dtex bis 20 dtex, aufweisen, wodurch bei geringem Strömungswiderstand eine weitere Erhöhung der Festigkeit erreichbar ist.

Eine andere Ausgestaltung des erfindungsgemäßen Filterelementes sieht vor, dass der Anteil der zweiten Fasern im Filtervlies zwischen 10 Gewichtsprozent und 70 Gewichtsprozent beträgt, wodurch bei geringem Strömungswiderstand eine besondere Erhöhung der Festigkeit erreichbar ist. Besonders bevorzugt beträgt der Anteil der Strukturfasern zwischen 55 Gewichtsprozent und 65 Gewichtsprozent, insbesondere 60 Gewichtsprozent, während der Anteil der zweiten Fasern im Filtervlies zwischen 35 Gewichtsprozent und 45 Gewichtsprozent, insbesondere 40 Gewichtsprozent, beträgt.

Eine andere Ausgestaltung des erfindungsgemäßen Filterelementes sieht vor, dass das Flächengewicht des Drainageelementes zwischen 200 bis 600 g/m², bevorzugt zwischen 300 bis 400 g/m² beträgt. Ein derartiges Flächengewicht bestimmt im Zusammenwirken mit der Dickenkalibrierung sowohl den Strömungswiderstand in der Ebene als auch die Festigkeit des Drainageelements und des Filterelement besonders günstig.

Eine besondere Ausgestaltung des erfindungsgemäßen Filterelementes sieht vor, dass normal zu einer Fläche, insbesondere zu einer Ebene des Filtervlieses, ein Teil der Fasern des Filtervlieses durch Vernadeln oder Wasserstrahlen gezielt senkrecht gestellt sind. Dadurch wird die Festigkeit des Filtervlieses der Vliesfasern normal zu dessen Fläche gegenüber Druck- und Zugspannungen, die aus Innendruck oder Außendruck auf die Filtermembranen resultieren, deutlich verbessert.

Eine andere Ausgestaltung des erfindungsgemäßen Filterelementes sieht vor, dass das Klebevlies aus einem niedrig schmelzenden Kunststoff gebildet ist, also aus einem Kunststoff mit einer Schmelztemperatur zwischen 70°C und 140°C, und dass das Flächengewicht des Klebevlieses zwischen 10 g/qm und 40 g/qm, bevorzugt zwischen 15 g/qm und 25 g/qm, beträgt. Der Verbund zwischen Drainageelement und Filtermembran wird dadurch besonders dauerhaft und fest.

Eine weitere Ausgestaltung des erfindungsgemäßen Filterelementes sieht vor, dass in wenigstens eine Oberfläche des Drainageelementes eine Anzahl von kanalartigen Vertiefungen eingearbeitet ist. Bevorzugt sind diese kanalartigen Vertiefungen thermisch eingeprägt oder mittels eines ultraschallunterstützten Verfahrens oder mittels eines Nähverfahrens eingearbeitet.

Diese kanalartigen Vertiefungen bilden Strömungskanäle und können in das Filtervlies vor oder nach dem Kalibrieren dauerhaft eingeprägt werden. Diese Strömungskanäle beeinträchtigen nicht die Festigkeit und Dauerhaftigkeit der nachträglichen Laminierung mit der Filtermembran, verbessern jedoch deutlich den Wasserfluss des Filterelementes.

Das Einbringen der kanalartigen Vertiefungen erfolgt bei bewegtem Filtervlies, beispielsweise durch Transport über Kalanderwalzen oder durch eine Nähmaschine. Bei unbewegtem Filtervlies erfolgt das Einbringen der kanalartigen Vertiefungen beispielsweise in einer statischen Presse.

Die Breite der kanalartigen Vertiefungen ist im Wesentlichen kleiner als die Dicke des Drainageelementes und ist optional in Abhängigkeit vom Ort variabel.

Bevorzugt nimmt die Kanalbreite zu Absaugöffnungen der Filtermembran hin zu; entsprechend der zu befördernden Filtratmengen.

Die kanalartigen Vertiefungen bilden besonders bevorzugt ein quadratisches Muster, dessen Linien parallel zu den Diagonalen eines aus dem Laminat geformten Quadrates verlaufen. Die kanalartigen Vertiefungen bilden einem Taschenformat oder einem Einsatzzweck angepasste Muster.
Die Erzeugung der kanalartigen Vertiefungen erfolgt bevorzugt durch die Kombination zweier Strukturierungsverfahren, insbesondere längs und/oder quer zu einer Fertigungsrichtung.

In einer Ausführungsform des Filterelements ist in dem Drainageelement, das heißt in das Filtervlies, mindestens ein Adsorbens und/oder Absorbens, ein katalytisch wirkendes oder ein Ionenaustauscher-Material (im Folgenden "reaktives Material" genannt) eingelagert und fixiert.

Somit wird die Filterwirkung des Drainageelements um eine Absorberwirkung und/oder Adsorberwirkung, um katalytische oder Ionenaustauschreaktionen erweitert. Auf diese Weise können unmittelbar nach dem Passieren der Filtrationsschicht durch das zu reinigende Medium, insbesondere eine Flüssigkeit, beispielsweise Wasser oder Abwasser, sofort die darin enthaltenen Schadstoffe auf verschiedenste Weise entfernt werden.

Beispielsweise kann der Adsorbens und/oder Absorbens Aktivkohle, Katalysatoren oder Ionenaustauschmaterial in Form von Partikeln, Fasern oder auf Partikeln oder Fasern aufgebrachten Schichten dieser Materialien umfassen.

Durch das Einbringen von reaktiven Materialien in das Drainageelement können gelöste schädliche und biologisch nicht abbaubare organische Verbindungen, beispielsweise multiresistente Keime verursachende Pharmaka, aus dem zu reinigenden Medium, beispielsweise Abwasser, entfernt werden.

Durch das Einbringen der reaktiven Materialien in das Drainageelement können ohne zusätzlichen Apparateaufwand, Raumbedarf und Verlust an Filtrationsleistung nicht nur neue Filteranlagen, sondern auch bestehende Filteranlagen aus- und nachgerüstet werden.

Mittels Auswahl von Art und Menge der reaktiven Materialien kann das Filterelement auf das konkrete Entsorgungsproblem wie auch die wirtschaftlichste Standzeit hin optimiert werden.

Es können auch Mischungen verschiedener reaktiver Materialien vorgesehen sein.

Das erfindungsgemäße Verfahren zur Herstellung eines Filterelementes sieht vor, dass ein aus einem Filtervlies gebildetes Drainageelement zwischen zwei Filtermembranen laminiert wird. Dabei wird zwischen dem Drainageelement und jeder Filtermembran jeweils ein Klebevlies angeordnet und anschließend erfolgt durch thermische Einwirkung unter Druck das Laminieren.

Durch das erfindungsgemäße Verfahren ist auf besonders einfache Weise ein Filterelement herstellbar, das eine hohe Stabilität gegenüber Zug- und Druckspannungen parallel zur Flächennormale sowie eine sehr gute Haltbarkeit aufweist. Zudem weist das derart hergestellte Drainageelement gegenüber den vorbekannten Erzeugnissen einen sehr geringen Strömungswiderstand auf. Das erfindungsgemäße Verfahren benötigt aufgrund der Verwendung von Klebevlies gegenüber dem Stand der Technik eine sehr geringe Menge von Klebstoff, wodurch der Strömungswiderstand des erfindungsgemäß hergestellten Filterelementes gering ist. Überraschend ist dabei, dass trotz der gegenüber dem Stand der Technik reduzierten Menge an Kleber eine verbesserte Stabilität und vor allem eine verbesserte Dauerhaftigkeit des erfindungsgemäß hergestellten Filterelementes erzielbar ist.

Eine Ausgestaltung des erfindungsgemäßen Verfahrens sieht vor, dass ein aus ersten Fasern und zweiten Fasern gebildetes Filtervlies verwendet wird, wobei die ersten Fasern Strukturfasern sind und die zweiten Fasern zumindest einen niedrigschmelzenden Klebermantel aufweisen. Dadurch wird die Herstellung eines besonders stabilen Filterelementes mit geringem Strömungswiderstand ermöglicht.

Eine weitere Ausgestaltung des erfindungsgemäßen Verfahrens sieht vor, dass vor dem Laminieren des aus einem Filtervlies gebildeten Drainageelementes zwischen zwei Filtermembranen folgende Verfahrensschritte erfolgen:
- durch Vernadeln oder Wasserstrahlen werden ein Teil der Fasern des Filtervlieses gezielt normal zur Fläche des Filtervlieses senkrecht gestellt,
- anschließend wird das Filtervlies auf eine Temperatur oberhalb der Schmelztemperatur der Ummantelung der zweiten Fasern erhitzt,
- anschließend wird mittels einer Bandpresse das Filtervlies in Form eines so entstandenen Vliesstoffs auf eine Dicke zwischen 2 mm und 6 mm, bevorzugt zwischen 3 mm und 4 mm, gepresst.

Durch das Vernadeln oder Wasserstrahlen wird die spätere Festigkeit des Filtervlieses verbessert. Besonders bevorzugt erfolgt das Vernadeln mit tiefem Nadeleinstich, wodurch die Enddicke des Drainageelementes bereits im Wesentlichen erreicht wird. Beispielsweise wird eine ursprüngliche Stärke des Filtervlieses von ca. 20 mm durch das Vernadeln auf 4 mm bis 5 mm reduziert. Dabei werden bevorzugt Nadeln mit Mikrogabel an der Nadelspitze und/oder Mikrohaken an der Nadelwandung verwendet. Anschließend wird das derart verfestigte Filtervlies mittels einer Bandpresse, insbesondere mittels eines Kalanders, unter thermischer Einwirkung weiter verfestigt, bevor es abkühlt.

Bevorzugt wird zum Laminieren ein aus einem niedrig schmelzenden Kunststoff gebildetes Klebevlies verwendet, das eine Schmelztemperatur zwischen 70°C und 140°C besitzt. Besonders bevorzugt beträgt das Flächengewicht des Klebevlieses zwischen 10 g/qm und 40 g/qm, besonders bevorzugt zwischen 15 g/qm und 25 g/qm.

Eine andere Ausgestaltung des erfindungsgemäßen Verfahrens sieht vor, dass in wenigstens eine Oberfläche des Drainageelementes eine Anzahl von kanalartigen Vertiefungen eingearbeitet wird, insbesondere mechanisch eingeprägt, thermisch eingeprägt, mittels Ultraschall eingeprägt oder eingenäht werden. Dadurch wird die einfache Herstellung eines stabilen und dauerhaften Filterelementes ermöglicht, das besonders effektiv ein Filtrat ableiten kann.

Besonders bevorzugt werden dazu die kanalartigen Vertiefungen Gruppen bildend parallel verlaufend angeordnet, so dass ein Muster gebildet wird.

In einer Ausführungsform des Verfahrens wird in das Drainageelement, das heißt in das Filtervlies, mindestens ein reaktives Material eingelagert und fixiert. Beispielsweise kann dieses aus ein oder mehreren Komponenten bestehende reaktive Material dem Filtervlies in dessen Herstellungsprozess kontinuierlich und mengenmäßig kontrolliert zugesetzt werden. Dabei kann das reaktive Material in verschiedener Form, beispielsweise als Partikel, als Faser oder als Auftragsschicht auf Partikeln oder Fasern appliziert werden.

Somit wird die Filterwirkung des Drainageelements um eine reaktive Wirkung erweitert.

Beispielsweise können als Adsorbens und/oder Absorbens Aktivkohlepartikel in das Drainageelement eingelagert und fixiert werden.

Durch das Einbringen von Aktivkohlepartikeln in das Drainageelement können gelöste schädliche und biologisch nicht abbaubare organische Verbindungen aus dem zu reinigenden Medium, beispielsweise Abwasser, entfernt werden.

Ausführungsbeispiele der Erfindung werden im Folgenden anhand von Zeichnungen näher erläutert.

Darin zeigen:
- Figur 1: eine auszugsweise schematische Schnittdarstellung einer ersten Ausführungsform eines erfindungsgemäßen Filterelementes,
- Figur 2: ist eine schematische Seitenansicht dieses Filterelementes,
- Figur 3: eine auszugsweise schematische Draufsicht auf eine Ausführungsform eines Drainageelementes und
- Figur 4: eine zugehörige auszugsweise schematische Schnittdarstellung.

Einander entsprechende Teile sind in allen Figuren mit den gleichen Bezugszeichen versehen.

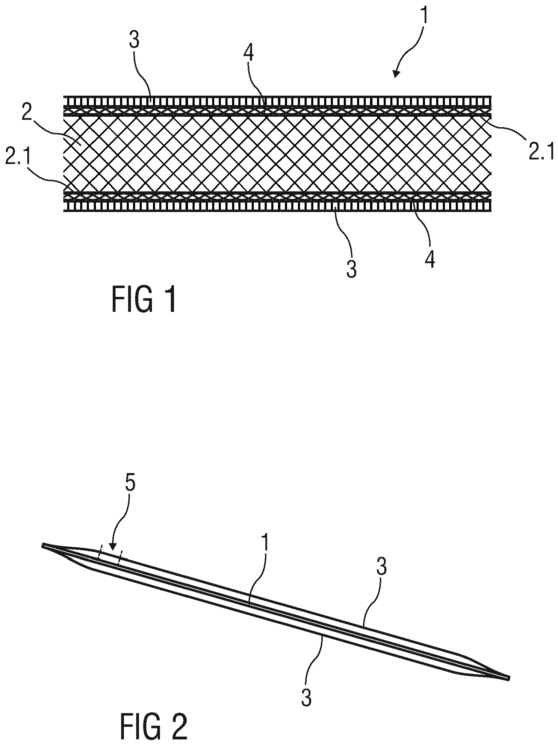

**Figur 1** zeigt ein erfindungsgemäßes Filterelement 1, bei dem ein Drainageelement 2 zwischen zwei Filtermembranen 3 angeordnet ist. Das Drainageelement 2 ist jeweils mittels eines Klebevlieses 4 zwischen den Filtermembranen 3 laminiert.

Das Drainageelement 2 ist ein Filtervlies, der aus ersten Fasern und zweiten Fasern gebildet ist, wobei die ersten Fasern Strukturfasern aus hochschmelzendem Kunststoff sind und die zweiten Fasern einen niedrigschmelzenden Klebermantel aufweisen. Alternativ ist es möglich, zweite Fasern zu verwenden, die vollständig niedrigschmelzend sind. Der Anteil der zweiten Fasern im Filtervlies beträgt 40 % und das Flächengewicht des Drainageelementes beträgt 350 g/qm.

Im Filtervlies des Drainageelementes 2 ist ein Teil der Fasern normal zur Ebene des Filtervlieses gezielt gestellt, indem das Filtervlies vernadelt wurde.

Das Klebevlies 4, mit dem das Drainageelement 2 mit den Filtermembranen 3 laminiert ist, ist aus einem niedrig schmelzenden Kunststoff gebildet und weist ein Flächengewicht von 20 g/qm auf.

**Figur** 2 zeigt das erfindungsgemäße Filterelement 1 in Seitenansicht. Das Filterelement 1 weist eine plattenartige Form auf, wobei die beiden Filtermembranen 3 das nicht sichtbare Drainageelement 2 vollständig einschließen. Die rechts gezeigte Filtermembran 3 ist mit einer Absaugöffnung 5 versehen, durch welche Filtrat aus dem Filterelement 1 vorzugsweise durch Unterdruck absaugbar ist, das zuvor durch die Filtermembranen 3 in das Filterelement 1 eindrang.

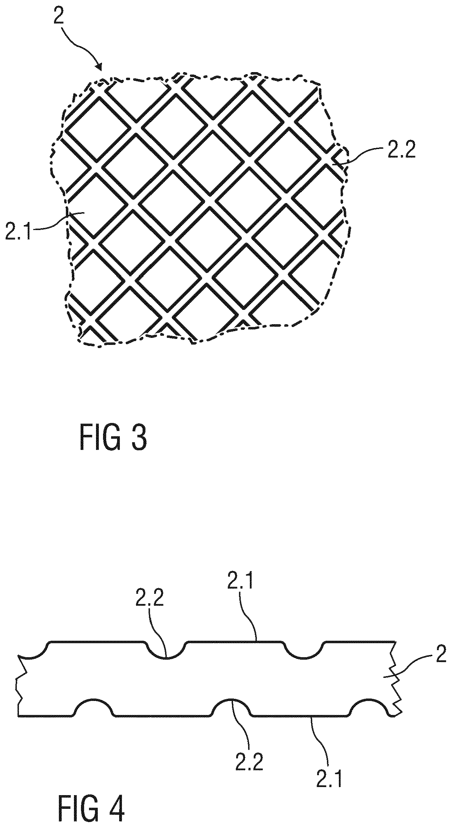

**Figur 3** und **Figur 4** zeigen eine auszugsweise schematische Draufsicht auf eine besondere Ausführungsform eines Drainageelementes 2, auf dessen Oberflächen 2.1 kanalartige Vertiefungen 2.2 eingearbeitet sind. Auf jeder Oberfläche 2.1 sind jeweils zwei Gruppen paralleler kanalartiger Vertiefungen 2.2 vorgesehen, wobei sich die beiden Gruppen jeweils unter einem rechten Winkel schneiden. Die kanalartigen Vertiefungen 2.2 dienen einer Verbesserung des Abtransportes eines Filtrates.

In einer Ausführungsform ist in dem Drainageelement 2, das heißt in das als Vliesstoff ausgebildete Filtervlies, mindestens ein reaktives Material eingelagert und fixiert.

Beispielsweise kann der Adsorbens und/oder Absorbens Aktivkohlepartikel umfassen.

### BEZUGSZEICHENLISTE

- 1: Filterelement
- 2: Drainageelement
- 2.1: Oberfläche
- 2.2: Vertiefung
- 3: Filtermembran
- 4: Klebevlies
- 5: Absaugöffnung

## Patentansprüche

1. Filterelement (1), umfassend ein zwischen zwei Filtermembranen (3) angeordnetes Drainageelement (2),
welches jeweils mittels eines Klebevlieses (4) zwischen den Filtermembranen (3) laminiert angeordnet ist, **dadurch gekennzeichnet dass** das Drainageelement (2) ein Filtervlies ist, wobei das Filtervlies aus ersten Fasern und zweiten Fasern gebildet ist, wobei die ersten Fasern Strukturfasern sind und die zweiten Fasern zumindest einen niedrigschmelzenden Klebermantel aufweisen, wobei die Strukturfasern Feinheiten zwischen 25 dtex und 100 dtex aufweisen.

2. Filterelement (1) nach Anspruch 1,
**dadurch gekennzeichnet, dass** die Strukturfasern aus hochschmelzendem Kunststoff, aus Mineralstoff oder aus Naturfasern bestehen.

3. Filterelement (1) nach einem der Ansprüche 1 oder 2,
**dadurch gekennzeichnet, dass** die zweiten Fasern Feinheiten zwischen 4 dtex und 36 dtex aufweisen.

4. Filterelement (1) nach einem der Ansprüche 1 bis 3,
**dadurch gekennzeichnet, dass** der Anteil der zweiten Fasern im Filtervlies zwischen 10 % und 70 % beträgt.

5. Filterelement (1) nach einem der Ansprüche 1 bis 4,
**dadurch gekennzeichnet, dass** das Flächengewicht des Drainageelementes zwischen 200 bis 600 g/m², bevorzugt zwischen 300 bis 400 g/m², beträgt.

6. Filterelement (1) nach einem der Ansprüche 1 bis 5,
**dadurch gekennzeichnet, dass** normal zu einer Ebene des Filtervlieses ein Teil der Fasern des Filtervlieses durch Vernadeln oder Wasserstrahlen gezielt senkrecht gestellt ist.

7. Filterelement (1) nach einem der vorhergehenden Ansprüche,
**dadurch gekennzeichnet, dass** das Klebevlieses (4) aus einem niedrig schmelzenden Kunststoff gebildet ist und dass das Flächengewicht des Klebevlieses (4) zwischen 10 g/m² und 40 g/m², bevorzugt zwischen 15 g/m² und 25 g/m², beträgt.

8. Filterelement (1) nach einem der vorhergehenden Ansprüche,
**dadurch gekennzeichnet, dass** in wenigstens eine Oberfläche (2.1) des Drainageelementes (2) eine Anzahl von kanalartigen Vertiefungen (2.2) eingearbeitet sind und/oder dass in dem Drainageelement (2) mindestens ein Adsorbens und/oder Absorbens, und/oder mindestens ein reaktives Material, insbesondere ein Katalysator und/oder ein Ionenaustauscher eingelagert und fixiert ist.

9. Filterelement (1) nach Anspruch 10, **dadurch gekennzeichnet, dass** das reaktive Material als Partikel, Faser oder als Belagschicht auf Partikeln oder Fasern vorliegt.

10. Verfahren zur Herstellung eines Filterelementes (1) nach einem der vorhergehenden Ansprüche,
wobei ein Drainageelement (2) zwischen zwei Filtermembranen (3) laminiert wird, wobei zwischen dem Drainageelement (2) und jeder Filtermembran (3) jeweils ein Klebevlies (4) angeordnet wird und anschließend durch thermische Einwirkung und Druck das Laminieren erfolgt, **dadurch gekennzeichnet dass** das Drainageelement (2) aus einem Filtervlies gebildet ist, wobei ein aus ersten Fasern und zweiten Fasern gebildeter Filtervlies verwendet wird, wobei die ersten Fasern Strukturfasern sind und die zweiten Fasern zumindest einen niedrigschmelzenden Klebermantel aufweisen, wobei die Strukturfasern Feinheiten zwischen 25 dtex und 100 dtex aufweisen.

11. Verfahren nach Anspruch 10,
**dadurch gekennzeichnet, dass**
- durch Vernadeln oder Wasserstrahlen ein Teil der Fasern des Filtervlieses gezielt normal zur Fläche des Filtervlieses senkrecht gestellt werden,
- dass anschließend das Filtervlies auf eine Temperatur oberhalb der Schmelztemperatur der Ummantelung der zweiten Fasern erhitzt wird,
- dass anschließend mittels einer Bandpresse das Filtervlies auf eine Dicke zwischen 2 mm und 6 mm, bevorzugt zwischen 3 mm und 4 mm, gepresst wird, bevor das Laminieren erfolgt.

12. Verfahren nach einem der Ansprüche 10 oder 11,
**dadurch gekennzeichnet, dass** in wenigstens eine Oberfläche (2.1) des Drainageelementes (2) eine Anzahl von kanalartigen Vertiefungen (2.2) eingearbeitet werden, insbesondere mechanisch eingeprägt, thermisch eingeprägt, mittels Ultraschall eingeprägt oder eingenäht werden.

13. Verfahren nach Anspruch 12,
**dadurch gekennzeichnet, dass** die kanalartigen Vertiefungen Gruppen bildend parallel verlaufend angeordnet werden, so dass ein Muster gebildet wird.

14. Verfahren nach einem der Ansprüche 10 bis 13,
**dadurch gekennzeichnet, dass** in das Drainageelement (2) mindestens ein Adsorbens und/oder Absorbens und/oder ein reaktives Material, insbesondere ein Katalysator und/oder Ionenaustauschermaterial eingelagert und fixiert wird.

15. Verfahren nach Anspruch 14,
**dadurch gekennzeichnet, dass** das reaktive Material in Form von Partikeln, Fasern oder als Belagschicht auf Partikeln oder Fasern in das Drainageelement (2) eingelagert und fixiert werden.

## Claims

1. Filter element (1) comprising a drainage element (2) arranged between two filter membranes (3) and which is arranged between said filter membranes (3) each laminated thereto via an adhesive fleece (4), **characterized in that** said drainage element (2) is a filtering fleece, wherein the filtering fleece is formed of first fibers and second fibers, wherein the first fibers are structural fibers and the second fibers have at least a low-melting sheath of adhesive, wherein the structural fibers have linear densities between 25 dtex and 100 dtex.

2. Filter element (1) according to Claim 1,
**characterized in that** the structural fibers consist of high-melting plastic, of mineral matter or of natural fibers.

3. Filter element (1) according to either of Claims 1 and 2,
**characterized in that** the second fibers have linear densities between 4 dtex and 36 dtex.

4. Filter element (1) according to any one of Claims 1 to 3,
**characterized in that** the proportion of second fibers in the filtering fleece is between 10% and 70%.

5. Filter element (1) according to any one of Claims 1 to 4,
**characterized in that** the basis weight of the drainage element is between 200 to 600 g/m², preferably between 300 to 400 g/m².

6. Filter element (1) according to any one of Claims 1 to 5,
**characterized in that**, normal to a plane of the filtering fleece, some of the fibers of the filtering fleece have an intentional perpendicular attitude due to needling or hydroentangling.

7. Filter element (1) according to any one of the preceding claims,
**characterized in that** said adhesive fleece (4) is formed of a low-melting plastic and **in that** the basis weight of said adhesive fleece (4) is between 10 g/m² and 40 g/m², preferably between 15 g/m² and 25 g/m².

8. Filter element (1) according to any one of the preceding claims,
**characterized in that** at least one surface (2.1) of said drainage element (2) has a number of channellike depressions (2.2) and/or **in that** at least one adsorbent and/or absorbent, and/or at least one reactive material, in particular a catalyst and/or an ion exchanger is embedded and fixed in said drainage element (2).

9. Filter element (1) according to Claim 10,
**characterized in that** the reactive material is in the form of a particle, in the form of a fiber or in the form of a coated layer on particles or fibers.

10. Method of producing a filter element (1) according to any one of the preceding claims,
wherein a drainage element (2) is laminated between two filter membranes (3), wherein an adhesive fleece (4) is arranged between said drainage element (2) and each filter membrane (3) and subsequently heat and pressure are applied to effect lamination, **characterized in that** the drainage element (2) is formed of a filtering fleece, wherein a filtering fleece formed of first fibers and second fibers is used, wherein the first fibers are structural fibers and the second fibers have at least a low-melting sheath of adhesive, wherein the structural fibers have linear densities between 25 dtex and 100 dtex.

11. Method according to Claim 10,
**characterized in that**
- some of the fibers of the filtering fleece are intentionally put into a perpendicular attitude normal to the face of the filtering fleece by needling or hydroentangling,
- subsequently the filtering fleece is heated to a temperature above the melting temperature of the sheathing of the second fibers,
- subsequently a belt press is used to press the filtering fleece to a thickness between 2 mm and 6 mm, preferably between 3 mm and 4 mm, before lamination is effected.

12. Method according to either of Claims 10 and 11,
**characterized in that** in at least one surface (2.1) of said drainage element (2) a number of channellike depressions (2.2) are introduced, in particular by mechanical embossing, thermal embossing, ultrasonic embossing or stitching.

13. Method according to Claim 12,
**characterized in that** the channellike depressions are arranged in parallel groups to form a pattern.

14. Method according to any one of Claims 10 to 13,
**characterized in that** at least one adsorbent and/or absorbent and/or at least one reactive material, in particular a catalyst and/or an ion exchanger material is embedded and fixed in said drainage element (2).

15. Method according to Claim 14,
**characterized in that** the reactive material is embedded and fixed into said drainage element (2) in the form of particles, fibers or as a coating layer on particles or fibers.

## Revendications

1. Elément de filtration (1), comprenant un élément de drainage (2) disposé entre deux membranes de filtration (3), qui est disposé sous forme stratifiée chaque fois au moyen d'un non-tissé adhésive (4) entre les membranes de filtration (3), **caractérisé en ce que** l'élément de drainage (2) est un non-tissé de filtration, dans lequel le non-tissé de filtration est formée de premières fibres et de secondes fibres, dans lequel les premières fibres sont des fibres de structure et les secondes fibres présentent au moins une gaine adhésive à bas point de fusion, dans lequel les fibres de structure présentent des finesses comprises entre 25 dtex et 100 dtex.

2. Elément de filtration (1) selon la revendication 1, **caractérisé en ce que** les fibres de structure sont composées de matière plastique à haut point de fusion, de substance minérale ou de fibres naturelles.

3. Elément de filtration (1) selon une des revendications 1 ou 2, **caractérisé en ce que** les secondes fibres présentent des finesses comprises entre 4 dtex et 36 dtex.

4. Elément de filtration (1) selon l'une quelconque des revendications 1 à 3, **caractérisé en ce que** la part des secondes fibres dans le non-tissé de filtration vaut entre 10 % et 70 %.

5. Elément de filtration (1) selon l'une quelconque des revendications 1 à 4, **caractérisé en ce que** le grammage de l'élément de drainage vaut entre 200 et 600 g/m², de préférence entre 300 et 400 g/m².

6. Elément de filtration (1) selon l'une quelconque des revendications 1 à 5, **caractérisé en ce qu'**une partie des fibres de le non-tissé de filtration sont placées normalement à un plan de le non-tissé de filtration par aiguilletage ou par des jets d'eau de façon ciblée perpendiculairement.

7. Elément de filtration (1) selon l'une quelconque des revendications précédentes, **caractérisé en ce que** le non-tissé adhésive (4) est formée d'une matière plastique à bas point de fusion et **en ce que** le grammage de le non-tissé adhésive (4) vaut entre 10 g/m² et 40 g/m², de préférence entre 15 g/m² et 25 g/m².

8. Elément de filtration (1) selon l'une quelconque des revendications précédentes, **caractérisé en ce qu'**un nombre de creux en forme de canal (2.2) sont usinés dans au moins une surface (2.1) de l'élément de drainage (2) et/ou **en ce qu'**au moins un adsorbant et/ou un absorbant, et/ou au moins un matériau réactif, en particulier un catalyseur et/ou un échangeur d'ions est incorporé et fixé dans l'élément de drainage (2).

9. Elément de filtration (1) selon la revendication 10, **caractérisé en ce que** le matériau réactif se présente sous forme de particules, de fibres ou d'une couche de revêtement sur des particules ou des fibres.

10. Procédé de fabrication d'un élément de filtration (1) selon l'une quelconque des revendications précédentes, **caractérisé en ce que** l'on stratifie un élément de drainage (2) entre deux membranes de filtration (3), dans lequel on dispose chaque fois un non-tissé adhésive (4) entre l'élément de drainage (2) et chaque membrane de filtration (3) et on effectue ensuite la stratification par l'action de la chaleur et de la pression, **caractérisé en ce que** l'élément de drainage (2) est formé par un non-tissé de filtration, dans lequel on utilise un non-tissé de filtration formée de premières fibres et de secondes fibres, dans lequel les premières fibres sont des fibres de structure et les secondes fibres présentent au moins une gaine adhésive à bas point de fusion, dans lequel les fibres de structure présentent des finesses comprises entre 25 dtex et 100 dtex.

11. Procédé selon la revendication 10, **caractérisé en ce que**
- on pose de façon ciblée perpendiculairement par aiguilletage ou par des jets d'eau une partie des fibres de le non-tissé de filtration normalement à la face de le non-tissé de filtration,
- on chauffe ensuite le non-tissé de filtration à une température supérieure à la température de fusion de la gaine des secondes fibres,
- on presse ensuite au moyen d'une presse à bande le non-tissé de filtration à une épaisseur comprise entre 2 mm et 6 mm, de préférence entre 3 mm et 4 mm, avant d'effectuer la stratification.

12. Procédé selon une des revendications 10 ou 11, **caractérisé en ce que** l'on usine dans au moins une surface (2.1) de l'élément de drainage (2) un nombre de creux en forme de canal (2.2), en particulier on les marque mécaniquement, on les marque à chaud, on les marque par ultrasons ou on les coud.

13. Procédé selon la revendication 12, **caractérisé en ce que** l'on dispose les creux en forme de canal en agencement parallèle en formant des groupes de façon à former un motif.

14. Procédé selon l'une quelconque des revendications 10 à 13, **caractérisé en ce que** l'on incorpore et on fixe dans l'élément de drainage (2) au moins un adsorbant et/ou un absorbant et/ou un matériau réactif, en particulier un catalyseur et/ou une matière échangeuse d'ions.

15. Procédé selon la revendication 14, **caractérisé en ce que** l'on incorpore et on fixe le matériau réactif dans l'élément de drainage (2) sous forme de particules, de fibres ou de couche de revêtement sur des particules ou des fibres.
